# EUROPEAN PATENT SPECIFICATION

(11) **EP 1 815 956 B1**
(45) Date of publication and mention of the grant of the patent: **28.04.2010**
(21) Application number: 07002599.4
(22) Date of filing: 07.02.2007
(51) Int. Cl.: B27N 3/28, B29C 47/10, C08J 3/205

(54) **Process for making coloured PVC-wood composite**
Verfahren zur Herstellung von Farbigen PVC-Holz-Verbundwerkstoff
Procédé pour la fabrication d'un composite de bois en PVC coloré

(30) Priority: 07.02.2006 EP 06002433
(43) Date of publication of application: 08.08.2007
(73) Proprietor: Deceuninck NV, 8830 Hooglede-Gits (BE)
(72) Inventor: Grymonprez, Wim, 8800 Roeselare (BE); Wallican, Luc, 8800 Roeselare (BE)
(74) Representative: Mooij, Johannes Jacobus

(56) References cited:
- WO-A-2005/044001
- WO-A-2005/097444
- DE-A1- 10 248 083
- US-A- 3 969 454
- US-A1- 2004 076 847
- US-A1- 2005 182 155
- US-B1- 6 321 804
- DATABASE WPI Section Ch, Week 200466 Derwent Publications Ltd., London, GB; Class A14, AN 2004-669562 XP002384433 & CN 1 500 832 A (HUACHANG IND TRADE CO LTD) 2 June 2004 (2004-06-02)
- DATABASE WPI Week 197915 Derwent Publications Ltd., London, GB; AN 1979-28676B XP002433883 & JP 54 029367 A (KAWANISHI KOGYO KK) 5 March 1979 (1979-03-05)
- DATABASE WPI Section Ch, Week 197914 Derwent Publications Ltd., London, GB; Class C01, AN 1979-26836B XP002384406 & JP 54 026308 A (SANYO MOKUZAI BOFU KK) 27 February 1979 (1979-02-27)

## Description

The invention relates to a process for making a coloured PVC-wood composite comprising the following steps:
a) drying wood particles until the water content is below 5%,
b) colouring the dried particles by impregnating them with a colouring material,
c) combining the thus formed coloured particles with a PVC polymer.

WO 2005/097444 describes a method in accordance with the preamble of claim 1, of manufacturing a fibrous polymer composite material by compounding an organic fibrous component in particulate form with a mouldable polymeric component to obtain a flowable heated paste which is formed into an artefact which is caused or allowed to set to provide a solid matrix in which the particles of the fibrous component are dispersed, such that prior to the setting of the polymeric component to form the matrix, the step of colouring the fibrous particles by impregnating them with a colouring material.

Typically, the fibrous component comprises wood fibres like sawdust particles, whereas the polymeric component is PVC.

The impregnating of the fibrous particles may be done by contacting them with a colouring liquid and causing or allowing the colouring liquid to enter interconnected cavities and/or passages in the interiors of the fibrous particles via surface pores.

The colouring material or pigment used for the spraying is in liquid form to facilitate impregnation and dispersal thereof in the fibrous particles by spraying. The fibrous particles may also be coloured by coating them with coatings of colouring material, which coatings, during the compounding, being liquefied sufficiently for the colouring material of the coatings to impregnate and penetrate the porous interiors of the fibrous particles. The coating material will be selected accordingly, to have a sufficiently low viscosity at the compounding temperature for this purpose. The coating, typically being a wax-based coating, contains pigment particles.

A disadvantage of such pigmented wax-based coating in the extrusion of a mixture of PVC and such fibrous particles is that the colorant releases from the particles, thus contaminating the extruder.

CN 1500832 describes a polyvinyl chloride plastic-wood board comprising materials including Polyvinyl chloride, wood dust and also a plasticizer.

JP 54029367 describes a process that comprises mixing pigment with wood meal-filled thermoplastic resin; moulding the mixture into a plate, heating and softening the plate; and cold compression-moulding the plate into the final product. Homogeneously coloured mouldings are produced in a reduced number of steps.

WO 2005/097444 further describes that various methods, of dying, known in the art and involving chemicals such as mordants and/or other reactive chemicals, may be used to obtain or promote deeper penetration of colouring material into the fibrous particles.

Whether wax based coatings or other chemicals are used to impregnate the porous interiors of the fibrous particles, after combining such particles with PVC, they all cause the impact strength of the resulting composite to decrease.

It is an object of the present invention to provide a method of manufacturing a homogeneously coloured PVC-wood composite without, or at least with a substantially lower decrease of the impact strength than the known method.

This object, in accordance with claim 1, is achieved in that the colouring material comprises an organic dye dissolved in a plasticizer for PVC.

With a colouring material that comprises an organic dye, dissolved in a plasticizer for PVC an improved impact strength of the PVC-wood composite is combined with an improved impregnation of the porous interior of the fibrous particles.

Another advantage of the use of a plasticizer for PVC is that this allows the use of light coloured dyes. Without being bound to any theory, this could be caused by the fact that during combining the coloured wood particles with the PVC, the plasticizer is absorbed by the PVC, thus leaving the organic dye sufficiently fixed in the wood particles to obtain a homogeneously coloured PVC-wood composite with a light colour.
In this application a PVC/wood composite is considered of a light colour when the colorimetric coordinates, L*, a* et b*, determined in accordance with ISO 7724-1, ISO 7724-2 and ISO 7724-3, using the test method D 65, SCI (specular reflectance included), 8/d or d/8, satisfy the following conditions :L* ≥ 82, -2,5 ≤ a* ≤ 5 and -5 ≤ b* ≤ 15.

Polyvinylchloride (PVC) is typically manufactured by free radical polymerization of vinyl chloride, possibly combined with one or more other vinyl monomers which results in vinyl chloride polymers respectively copolymers hereinafter all denoted as PVC polymers. Such copolymers may be linear, branched, graft, random copolymers or block copolymers. Vinyl monomers that can be combined with vinyl chloride to form such vinyl chloride copolymers include acrylonitrile, α-olefins such as ethylene, propylene or 1-butene, chlorinated monomers such as vinylidene dichloride, acrylic monomers such as acrylic acid, methyl acrylate, ethyl acrylate, methyl methacrylate, acrylamide, hydroxyethyl acrylate and the like, styrenic monomers such as styrene, α-methyl styrene, vinyl toluene and the like, and vinyl acetate. Such monomers may be used in an amount of up to about 50 % by moles, the balance being vinyl chloride. Polymer blends or polymer alloys can also be useful in manufacturing the coloured PVC-wood composites of the invention. Such alloys typically comprise two or more miscible polymers or copolymers suitably blended to form a substantially uniform composition. A polymer alloy at equilibrium preferably comprises a mixture of two or more amorphous polymers existing as a single phase of intimately mixed segments of the two macromolecular components and exhibits a single, composition-dependent, glass transition temperature (Tg).

Polyvinyl chloride forms a number of known polymer alloys that may also be used in the practice of this invention such as but not limited polyvinyl chloride / nitrile rubber, polyvinyl chloride / vinylidene dichloride copolymers, poly(vinyl chloride-co-α-methyl styrene-co-acrylonitrile copolymers, polyvinyl chloride / polyethylene blends and others.

The primary requirement for the substantially thermoplastic polymeric material to be used herein is, that it retains sufficient thermoplastic properties to be able of melt blending with wood particles, and that the resulting melt blend can be extruded or injection-moulded in a process for forming a rigid structural member.

Polyvinyl chloride polymers, copolymers and polymer alloys are commercially available in a wide variety of grades from a number of manufacturers. Preferred polyvinyl chloride materials are polyvinyl chloride polymers with a number average molecular weight Mₙ from about 50,000 to about 150,000, more preferably from 80,000 to 100,000 g/mol.

The polyvinyl chloride material may optionally be modified by the introduction of pending groups being able to form hydrogen bonds with the wood particles. As is well known to those skilled in the art, wood particles contain secondary and/or primary hydroxyl groups that are available for hydrogen bonding. Said pending groups may be introduced by copolymerization of vinyl chloride with a second monomer having functional groups that are capable of forming hydrogen bonds with the wood particles. The polyvinyl chloride polymer material may be modified either by grafting a reactive wood particle-compatible moiety onto the polyvinyl chloride backbone or by incorporating it, e.g. by copolymerization techniques, into the polymer backbone itself. Representative examples of monomers that can be included as one or more minor components (the total amounts of which should be less than 50 % by moles with respect to the whole copolymer) in a polyvinyl chloride copolymer include vinyl alcohol, maleic anhydride, glycidyl methacrylate, vinyl oxazolines, vinyl pyrrolidones, vinyl lactones and the like. Such comonomers, especially when present at the preferred concentrations of less than 10 % by moles, more preferably less than 5 % by moles, react covalently with cellulose hydroxyl groups and form associative bonds therewith, resulting in increased compatibility, but are not sufficiently reacted with vinyl chloride to result in a crosslinked material. The polyvinyl chloride polymer material can be grafted with a variety of reactive compounds preferably having a primary or secondary nitrogen, an oxygen atom, or a carboxyl group, such as but not limited to N-vinyl pyrrolidone, N-vinyl pyridine, N-vinyl pyrimidine, polyvinyl alcohol polymers, unsaturated fatty acids, acrylic acid, methacrylic acid, reactive acrylic oligomers, reactive amines, reactive amides and others. Any reactive or grafting species containing a hydrogen bonding atom is suitable as a graft reagent for this embodiment of the invention.

The polyvinyl chloride, material may also optionally be modified by including one or more impact modifiers, e.g. an impact modifier based on polymethylmethacrylate or another acrylic copolymer, with the purpose of further improving the impact strength. Suitable impact modifiers of this type, as well as the amount to be included into the thermoplastic material, are well known in the art.

After polymerization, PVC used in structural composites is commonly combined with one or more additives such as but not limited to thermal stabilizers, lubricants, fillers, biocides, processing aids, flame retardants and the like.

Plasticizers as solvent for the colouring material are selected from the groups A through J:
A) Phthalates (esters of phthalic acid) Examples of these phthalates are dimethyl, diethyl, dibutyl, dihexyl, di-2-ethylhexyl, di-n-octyl, diisooctyl, diisononyl, diisodecyl, diisotridecyl, dicyclohexyl, di-methylcyclohexyl, dimethyl glycol, dibutyl glycol, benzyl butyl and diphenyl phthalates, and mixtures of phthalates, such as C7 - C9 - and C9 -C11 alkyl phthalates made from predominantly linear alcohols, C6 -C10 - n-alkyl phthalates and C8 - C10-n-alkyl phthalates. Preference is given to dibutyl, dihexyl, di-2-ethylhexyl, di-n-octyl, diisooctyl, diisononyl, diisodecyl, diisotridecyl and benzyl butyl phthalates, and said mixtures of alkyl phthalates. Particular preference is given to di-2-ethylhexyl, diisononyl and diisodecyl phthalate.
B) Esters of aliphatic dicarboxylic acids, in particular of adipic, azelaic and sebacic acids. Examples of these plasticizers are di-2-ethylhexyl adipate, diisooctyladipate (mixture), di-isononyl adipate (mixture), diisodecyl adipate(mixture), benzyl butyl adipate, benzyl octyl adipate, di-2-ethylhexylazelate, di-2-ethylhexyl sebacate and diisodecyl sebacate (mixture). Preference is given to di-2-ethylhexyl adipate and diisooctyl adipate.
C) Esters of trimellitic acid for example tri-2-ethylhexyl trimellitate, triisodecyl trimellitate (mixture), triisotridecyl trimellitate, triisooctyl trimellitate (mixture) and tri-C6 -C8 alkyl, tri-C6 -C10 alkyl, tri-C7 -C9 alkyl- and tri-C9 -C11 alkyl trimellitates. The last-mentioned trimellitates are formed by esterifying trimellitic acid by means of the appropriate alkanol mixtures. Preferred trimellitates are tri-2-ethylhexyl trimellitate and said trimellitates made from alkanol mixtures.
D) Epoxide plasticizers, for example epoxidized soybean oil, linseed oil or octyl oleate.
E) Polymer plasticizers A definition of these plasticizers and examples thereof are given in "Plastics Additives", edited by H. Gachter and H. Muller, Hanser Verlag, 1990, page 393-396, and in "PVC Technology", edited by W. V. Titow, 4th. Ed., Elsevier Publ., 1984, pages 165-170. The most usual starting materials for the preparation of polyester plasticizers are: dicarboxylic acids, such as adipic, phthalic, azelaic and sebacic acids; diols, such as 1,2-propanediol, 1,3-butanediol, 1,4-butanediol, 1,6-hexanediol, neopentyl glycol and diethylene glycol; monocarboxylic acids, such as acetic, caproic, caprylic, lauric, myristic, palmitic, stearic, pelargonic and benzoic acids; monofunctional alcohols, such as isooctanol, 2-ethylhexanol, isodecanol and C7-C9 alkanol and C9 -C11 alkanol mixtures. Particularly advantageous are polyester plasticizers made from said dicarboxylic acids and monofunctional alcohols.
F) Esters of phosphoric acid. A definition of these esters is given in the abovementioned book "Plastics Additives" on pages 390-393. Examples of these phosphates are tributyl phosphate, tri-2-ethylbutyl phosphate, tri-2-ethylhexyl phosphate, trichloroethyl phosphate, 2-ethylhexyl diphenyl phosphate, cresyl diphenyl phosphate, triphenyl phosphate, tricresyl phosphate and trixylenyl phosphate. Preference is given to tri-2-ethylhexyl phosphate and ®Reofos 50.
G) Chlorinated hydrocarbons (paraffins)
H) Hydrocarbons
I) Monoesters, for example butyl oleate, phenoxyethyl oleate, tetrahydrofurfuryl oleate and esters of alkylsulfonic acids.
J) Glycol esters, for example diglycol benzoate, butylphthalyl butyl glycolate, dipropylene glycol dibenzoate or neopentyl glycol dibenzoate. Definitions and examples of plasticizers from groups G) to J) are given in the following handbooks:
   "Plastics Additives", edited by H. Gachter and H. Muller, Hanser Publishers, 1990, pages 403-405 (Group G)), and page 403 (Group H)).
   "PVC Technology", edited by W. V. Titow, 4th. Ed., Elsevier Publishers, 1984, pages 171-173, chapter 6.10.2 (Group G)), page 174, chapter 6.10.5 (Group H)), page 173, chapter 6.10.3 (Group 1)) and pages 173-174, chapter 6.10.4 (Group J)).

Particular preference is given to plasticizers from groups A) to F), in particular A) to D) and F), especially the plasticizers in these groups which have been mentioned as preferred.

Suitable organic dyes for the practice of this invention include, but are not limited to, phtalocyanines and anthraquinone dyes such as alizarines (e.g. alizarin red, alizarin cyanin green, alizarin blue, alizarin orange, acid alizarin violet N) and purpurin, quinoinic dyes such as substituted naphthoquinones, phenoxazines and phenothiazines, carotinoid dyes, chalcone dyes, Victoria blue B, Victoria blue R, indigoid dyes such as indigo blue, indigocarmine and thioindigo, nitro and nitroso dyes such as naphthol green N and naphthol yellow S ; diphenylmethane and triphenylmethane dyes, methine dyes, monoazo dyes and diazo dyes, Acid blue, Acid green, Acid orange, Acid red, Acid violet and Acid yellow. With respect to composite materials intended for outdoor applications, organic dyes are more preferably restricted to those which can withstand ultraviolet (UV) light for a long period of time.

The size of wood particles to be used in the process of the invention is not a critical parameter, provided that it is suitable for hot extrusion under standard conditions. Usually, such wood particles are selected from the group consisting of wood dust with an average particle size from about 25 µm to 250 µm, wood flower with an average particle size from 250 µm to 750 µm, and wood chips with an average particle size from 750 µm to about 2.0 mm.

In a first step of the process of the invention the wood particles are dried until their water content is below 5 % by weight, preferably below 1% by weight, more preferably below 0.1 % by weight, most preferably below 0.05% by weight. This means a significant level of drying is required since, depending upon factors such as relative humidity and season, trees typically have water content between about 10 % and 30 % by weight. Drying in this first step of the process of the invention may be effected by any means known in the art, i.e. with or without the application of vacuum, and using standard drying equipment known to the skilled person.

In a second step of the process of the invention the dried wood particles are impregnated with a colouring material. This can be done by spraying or tumbling or a combination of both. Suitable amounts of a colouring material mainly depend upon the selected organic dye, the desired intensity of colour and upon the aesthetic effect to be provided. Such amounts range from about 0.1 % to 5 % by weight, preferably 0.5 to 3 % by weight, of the PVC-wood composite material.

In a particular embodiment of the invention, the composite may further optionally comprise one or more UV light stabilizers. The latter may be selected according to the knowledge of the skilled person and should be incorporated into the composite in the usual amounts for such additives.

In a third step of the process of the invention, combination of the coloured wood particles and the PVC may be effected by means of extrusion at an elevated temperature between about 160°C and 240°C, preferably between about 170°C and 220°C, more preferably between about 175°C and 210°C. Preferably, the one or more organic dyes should be selected so that they are not subject to deterioration during extrusion at said elevated temperatures.

In another particular embodiment of the process of the invention, dried wood particles represent from about 30 to 60 % by weight, preferably from 35 to 50 % by weight, of the wood-polymer combination being processed, whereas the PVC represents from about 40 to 70 % by weight, preferably from 50 to 65 % by weight, of said PVC-wood composite.

A particular advantage of an article comprising the composite made according to the invention is that a surface of this article can be brushed to give it a wood like appearance. The improved impregnation of the wood particles warrants a homogeneous surface colour after brushing of the surface without wood coloured speckles caused by insufficiently impregnated wood particle interiors.

### Example I

Phthalocyanine Green (G5319) is mixed with diisodecylphtalate (DIDP) in a weight ratio G5319 / DIDP of 1:10. The resulting mixture (A) is tumbled with wood dust with an average particle size of 400 µm in a weight ratio mixture (A) / wood dust of 3:10. The resulting mixture (B) was mixed with PVC with a K value of 57 in a weight ratio mixture (B) / PVC of 1:1 and extruded with a FIB58 exruder of Cincinnati to a sheet at a temperature of 175 °C. The resulting sheet was homogeneously green under visual inspection.

### Comparative Example

Using the same relative amounts of the different components as used in Example I, DIDP was tumbled with wood dust with an average particle size of 400 µm. The resulting mixture was mixed with PVC with a K value of 57 comprising an amount of of Phthalocyanine Green (G5319) and extruded at 175 °C with the same extruding apparatus as example I. The resulting sheet showed by visual examination both non colored and insufficiently colored particles, thus exhibiting a non-homogeneous character.

## Claims

1. A process for making a PVC-wood composite, comprising the following steps
a) drying wood particles until their water content is below 5% by weight,
b) colouring the dried particles by impregnating them with a colouring material,
c) combining the coloured wood particles with a PVC polymer, **characterised in that** the colouring material comprises one or more organic dyes dissolved in one or more plasticizers for PVC.

2. A process according to claim 1, wherein said wood particles are dried until their water content is below 0.1 % by weight.

3. A process according to claim 2, wherein said polyvinyl chloride further comprises an impact modifier.

4. A process according to claim 3, wherein said impact modifier is based on polymethylmethacrylate or an acrylic copolymer.

5. A process according to any of claims 1 to 4, wherein said one or more plasticizers are selected from the group consisting of dialkylphtalates.

6. A process according to any of claims 1 to 5, wherein said one or more colouring materials are selected from the group consisting of organic dyes with substantial UV-light stability.

7. A process according to any of claims 1 to 6, wherein said wood particles are selected from the group consisting of wood dust with an average particle size from about 25 µm to 250 µm, wood flower with an average particle size from 250 µm to 750 µm, and wood chips with an average particle size from 750 µm to about 2.0 mm.

8. A process according to any of claims 1 to 7, wherein combination of said coloured wood particles and said PVC polymer is effected by means of extrusion at an elevated temperature between about 160 and 210°C.

9. A process according to claim 8, wherein said organic dye is selected so that it is not subject to deterioration during extrusion at said elevated temperature.

10. A process according to any claims 1 to 9, wherein said process further comprises a step of processing said composite into an article.

11. A process according to claim 10, wherein said process further includes a step of brushing one or more surfaces of said article.

## Patentansprüche

1. Ein Verfahren zur Herstellung eines PVC-Holz-Verbundwerkstoffs, das die folgenden Schritte umfasst:
a) das Trocknen von Holzteilchen bis der Wassergehalt unter 5 Gewichtsprozenten liegt,
b) das Einfärben der getrockneten Teilchen durch Imprägnieren mit Färbemitteln,
c) das Kombinieren der eingefärbten Holzteilchen mit einem PVC-Polymer, **dadurch gekennzeichnet, dass** das Färbemittel eine oder mehrere organische Farbstoffe umfasst, die in einem oder mehreren Weichmachern für PVC gelöst sind.

2. Ein Verfahren nach Anspruch 1, worin die besagten Holzteilchen bis auf einen Wassergehalt von unter 0,1 Gewichtsprozent getrocknet werden.

3. Ein Verfahren nach Anspruch 2, worin das besagte Polyvinylchlorid ferner einen Schlagzähigkeitsverbesserer umfasst.

4. Ein Verfahren nach Anspruch 3, worin der besagte Schlagzähigkeitsverbesserer auf der Basis von Polymethylmethacrylat oder einem Acrylatcopolymer besteht.

5. Ein Verfahren nach einem der Ansprüche 1 bis 4, worin besagter eine oder mehrere Weichmacher aus der Gruppe der Dialkylphthalate ausgewählt sind.

6. Ein Verfahren nach einem der Ansprüche 1 bis 5, worin besagte ein oder mehrere Färbemittel aus der Gruppe der organischen Farbstoffe mit bedeutender UV-Lichtbeständigkeit ausgewählt sind.

7. Ein Verfahren nach einem der Ansprüche 1 bis 6, worin, die besagten Holzteilchen aus einer der folgenden Gruppen ausgewählt sind: Holzstaub mit einer Durchschnittsteilchengröße von etwa 25 µm bis 250 µm, Holzmehl mit einer Durchschnittsteilchengröße von 250 µm bis 750 µm und Holzspäne mit einer Durchschnittsteilchengröße von 750 µm bis etwa 2,0 mm.

8. Ein Verfahren nach einem der Ansprüche 1 bis 7, worin eine Kombination von besagten farbigen Holzteilchen und besagtem PVC-Polymer mittels Extrudieren bei erhöhter Temperatur zwischen etwa 160 und 210 °C erfolgt.

9. Ein Verfahren nach Anspruch 8, worin besagter organischer Farbstoff ausgewählt wird, sodass er nicht einer Verschlechterung während des Extrudierens bei besagten erhöhten Temperaturen unterliegt.

10. Ein Verfahren nach einem der Ansprüche 1 bis 9, worin besagtes Verfahren ferner einen Schritt zur Verarbeitung des besagten Verbundwerkstoffs in einen Artikel umfasst.

11. Ein Verfahren nach Anspruch 10, worin besagtes Verfahren ferner einen Schritt 'Bürsten' von einer oder mehreren Oberflächen des besagten Artikels einschließt.

## Revendications

1. Procédé pour fabriquer un composite PVC-bois, comprenant les étapes suivantes :
a) faire sécher des particules de bois jusqu'à ce que leur teneur en eau soit inférieure à 5 % en poids ;
b) teindre les particules séchées en les imprégnant d'une matière tinctoriale ;
c) combiner les particules de bois teintes avec un polymère de PVC, **caractérisé en ce que** la matière tinctoriale comprend une ou plusieurs teintures organiques dissoutes dans un ou plusieurs plastifiants pour PVC.

2. Procédé selon la revendication 1, dans lequel lesdites particules de bois sont séchées jusqu'à ce que leur teneur en eau soit inférieure à 0,1 % en poids.

3. Procédé selon la revendication 2, dans lequel ledit chlorure de polyvinyle comprend par ailleurs un agent antichoc.

4. Procédé selon la revendication 3, dans lequel ledit agent antichoc est basé sur le polyméthacrylate de méthyle ou sur un copolymère acrylique.

5. Procédé selon l'une quelconque des revendications 1 à 4, dans lequel lesdits un ou plusieurs plastifiants sont sélectionnés dans le groupe constitué des phtalates de dialkyle.

6. Procédé selon l'une quelconque des revendications 1 à 5, dans lequel lesdites une ou plusieurs matières tinctoriales sont sélectionnées dans le groupe constitué des teintures organiques présentant une stabilité substantielle à la lumière UV.

7. Procédé selon l'une quelconque des revendications 1 à 6, dans lequel lesdites particules de bois sont sélectionnées dans le groupe constitué de la sciure de bois ayant une dimension granulométrique moyenne allant d'environ 25 µm à 250 µm, de la farine de bois ayant une dimension granulométrique moyenne allant de 250 µm à 750 µm et des copeaux de bois ayant une dimension granulométrique moyenne allant de 750 µm à environ 2,0 mm.

8. Procédé selon l'une quelconque des revendications 1 à 7, dans lequel la combinaison desdites particules de bois teintes et dudit polymère de PVC est effectuée par voie d'extrusion à une température élevée comprise entre environ 160 et 210 °C.

9. Procédé selon la revendication 8, dans lequel ladite teinture organique est sélectionnée de telle sorte qu'elle ne subit pas de détérioration durant l'extrusion à ladite température élevée.

10. Procédé selon l'une quelconque des revendications 1 à 9, dans lequel ledit procédé comprend par ailleurs une étape de transformation dudit composite en un article.

11. Procédé selon la revendication 10, dans lequel ledit procédé comprend par ailleurs une étape de brossage d'une ou de plusieurs surfaces dudit article.
